# EUROPÄISCHE PATENTSCHRIFT

(11) **EP 1 086 937 B1**
(45) Veröffentlichungstag und Bekanntmachung des Hinweises auf die Patenterteilung: **05.11.2003**
(21) Anmeldenummer: 00890241.3
(22) Anmeldetag: 03.08.2000
(51) Int. Cl.: C04B 41/88, C22C 1/10

(54) **Verfahren zur Herstellung eines Metall-Matrix-Composite (MMC-)Bauteiles**
Process for producing a metal matrix composite article
Procédé de fabrication d'une pièce en matériau composite à matrice metallique

(30) Priorität: 22.09.1999 AT 161999
(43) Veröffentlichungstag der Anmeldung: 28.03.2001
(73) Patentinhaber: ELECTROVAC FABRIKATION ELEKTROTECHNISCHER SPEZIALARTIKEL GESELLSCHAFT M.B.H., 3400 Klosterneuburg (AT)
(72) Erfinder: Schmitt, Theodore Nicolas, Dr., 1230 Wien (AT)
(74) Vertreter: Gibler, Ferdinand, Dipl.Ing. Dr. techn.

(56) Entgegenhaltungen:
- WO-A-99/32679

## Beschreibung

Die Erfindung betrifft ein Verfahren zur Herstellung eines Metall-Matrix-Composite-(MMC-) Bauteiles umfassend eine keramische, poröse Konsistenz aufweisende Vorform, deren Poren mit Matrix-Metall gefüllt sind, wobei zur Herstellung der Vorform keramisches Pulver mit einem flüssigen Träger ohne Zugabe eines Bindemittels zu einem thixotrope Eigenschaften aufweisenden Schlicker vermischt wird, dieser Schlicker in eine im wesentlichen dichte Konsistenz aufweisende Gußform eingebracht wird, welche Gußform zumindest nach Abschluß des Schlicker-Einbringens, vorzugsweise auch während des Schlicker-Einbringens, mit Vibrationen beaufschlagt wird, und der Schlicker durch Abstellen der Vibrationen und In-Ruhe-Halten der Gußform erstarren gelassen wird, wobei weiters der Schlicker in der Gußform zu einem Vorformkörper verfestigt wird und Metall in die Poren dieses Vorformkörpers eingegossen wird und die Gußform nach Abschluß des Schlicker-Einbringens und vor dem Erstarren-Lassen weiterhin mit Vibrationen beaufschlagt gehalten wird, wodurch der im Schlicker enthaltene flüssige Träger von den Keramikpartikeln abgetrennt wird und auf diesen aufschwimmt und der Schlicker gleichzeitig zu einem Vorformkörper verfestigt wird.

MMC-Materialien stellen Werkstoffe dar, bei denen eine Vorform und ein Metall in unterschiedlichen Mengenverhältnissen ineinander eingebettet vorliegen. Unter Vorform versteht man ein poröses Gefüge aus einem Verstärkungsmaterial. Die Gestalt des Vorformmateriales kann dabei vielfältig sein, es kann beispielsweise in Form einzelner Teilchen beliebiger Geometrie (kugelig, kantig, kurz- oder langfasrig oder in Gestalt von Whisker) vorliegen. Daneben ist es möglich, die Vorform aus einem oder mehreren größeren Körpern auszubilden, welche poröse Struktur aufweisen.

In den Zwischenräumen zwischen den einzelnen Teilchen bzw. in den Poren eines porösen Körpers befindet sich das Metall, welches mittels einem sogenannten Infiltrationsvorgang in diese Zwischenräume bzw. Poren eingebracht wird. Dieser Infiltrationsvorgang ist im wesentlichen ein Gußvorgang, mittels welchem Metall in die doch sehr engen Poren der Vorform eingebracht werden kann. Ist das Benetzungsverhalten zwischen dem Material der Vorform und dem Metall in den Poren schlecht, muß auf das Metall ein Zwang ausgeübt werden, damit es die Porenhohlräume füllt. In erster Linie kommt hierfür ein Druckvorgang in Frage, bei welchem auf das flüssige Metall Druck (z.B. Gasdruck oder mechanischer Druck mittels Stempel) ausgeübt wird, aufgrund welchen Druckes das Metall in die Poren der Vorform hineingedrückt wird. Eine andere Möglichkeit der Gestaltung des Infiltrationsverfahrens liegt darin, Maßnahmen zu treffen, die Oberflächenspannung des flüssigen Metalles soweit herabzusetzen, daß das Metall auch ohne besonderen Druck in die Poren der Vorform eindringt. Ein solches Infiltrationsverfahren ist in der Literatur als "spontane Infiltration" bekannt geworden. Die Herabsetzung der Oberflächenspannung des Metalles erreicht man dadurch, daß man das flüssige Metall mit entsprechenden, die Oberflächenspannung herabsetzenden Stoffen in Kontakt bringt, was durch Zumischung dieser Stoffe zum flüssigen Metall oder durch Einbringung dieser Stoffe in die Umgebungsatmosphäre des flüssigen Metalles erreichbar ist.

Das Erstarren des flüssigen Metalls erfolgt bei nicht benetzenden Vorform-Metall-Systemen unter Druck, damit keine Entmischung auftritt, d.h. das in die Vorform eingebrachte Metall nicht wieder aus deren Poren herausquillt.

Die Vorform hat die Aufgabe, dem fertigen Verbundkörper bzw. dem verwendeten Matrixmaterial bestimmte bzw. besondere mechanische, thermische und elektrische Eigenschaften zu verleihen. Diese werden im wesentlichen von der Anordnung und Zusammensetzung der Vorform bestimmt. So bestimmt z.B. der Volumsanteil zusammen mit dem E-Modul den Ausdehnungskoeffizienten. Ein hoher E-Modul und eine hohe Packungsdichte ergibt einen niedrigen Ausdehnungskoeffizienten, während ein niedriger E-Modul mit der gleichen Packungsdichte eine vergleichsweise hohe Ausdehnung bewirkt oder aber ein sehr hoher Volumsanteil notwendig ist. Unterschiedliche Zusammensetzung des Materiales beeinflußt z.B. die thermische Leitfähigkeit. So wird ein Verbund aus Aluminium und Al₂O₃ eine wesentlich niedrigere Leitfähigkeit aufweisen als ein Verbund aus Al und SiC. Desweiteren beeinflußt auch die Art des Infiltrationsmetalles die mechanischen, elektrischen und thermischen Eigenschaften des entstehenden MMC-Materials. Als Beispiele für gängige Infiltrationsmetalle können beispielsweise Aluminium, Magnesium, Kupfer sowie Legierungen umfassend eines oder mehrere dieser Metalle genannt werden, wobei aber auch andere Metalle oder metallähnliche Elemente verwendet werden können.

Für die Herstellung von porösen Keramikbauteilen, welche als Vorformen für solche MMC-Bauteile dienen können, sind eine Reihe von Formgebungsverfahren bekannt. Die wichtigsten sind Spritzgießen, Heißgießen, Trockenpressen, Foliengießen, Vakuumgießen und Schlickergießen. Bei jedem der genannten Verfahren wird keramisches Pulver mit einem Bindemittel, einem Gleitmittel usw. versetzt, diese Mischung fließfähig gemacht und in die gewünschte Form gebracht. Hervorzuheben ist, daß das Schlickergießen auch ohne Binderzusätze möglich ist.

Als konkretes Beispiel wird im folgenden das Heißgießverfahren genauer behandelt. Hier werden als Bindemittel Thermoplaste (bis zu 45 Vol.-%), wie z.B. Paraffine oder Wachse dem Keramikpulver zugesetzt und dieses Mischung durch Erhitzen flüssig gemacht. Die dabei erhaltene fließfähige Masse wird in eine Form eingegossen. Nach dem Erstarren des Bindemittels wird die Vorform entformt, das Bindemittel durch Erhitzen ausgetrieben und das Werkstück gesintert. Je nach Sinterdauer und der dabei gewählten Sintertemperatur kann ein poröses, selbsttragendes oder dichtes Gefüge erzeugt werden.

Entsprechende Vorformen können auch mittels Spritzguß erzeugt werden. Hierbei wird ein mit Binder versehenes Pulvergemisch (bis zu 40% Binderanteil ist notwendig) in eine entsprechende Form gespritzt und erhärten gelassen. Wie beim Heißgießen wird anschließend der Binder entfernt.

Eine weitere Möglichkeit ist das Trockenpressen von Keramiken. Hier wird eine fließfähige Pulvermischung in ein entsprechendes Vorformwerkzeug gefüllt und mittels Stempel in die gewünschte Form gepreßt. Der notwendige Binder oder auch das Preßhilfsmittel kann hier im Vergleich zum obigen Heißgießverfahren weitaus weniger komplex aufgebaut sein, auch ist die zu verwendende Menge wesentlich geringer. Als in Frage kommende Bindemittel können vor allem Stearate und Paraffine angeführt werden.

Bei all diesen Formgebungs- oder Vorformverfahren werden die notwendigen Mengen an organischen Zusätzen nach der Formgebung wieder entfernt. Dies geschieht meistens mittels thermischer Verfahren. Aufgrund des hohen Anteiles an organischer Substanz muß dieser Vorgang aber langsam geschehen, besonders bei Formkörper mit unregelmäßiger Geometrie, da sonst Aufplatzungen an der Oberfläche, Deformationen im Formteil auftreten und diesen unbrauchbar machen. In Abhängigkeit von den speziellen Binderzugaben und Gleitmittelzusätzen wird eine Entbinderung bei Temperaturen von 300°C bis 700°C nach einem stoff- und erzeugnisspezifischen Zeitprogramm durchgeführt. Hierfür sind Öfen mit komplexen Temperaturprogrammen und sehr genau einzuhaltenden Temperaturprofilen notwendig. Die Prozeßdauer kann, je nach Komplexität des Teiles, mehrere Tage betragen. Bei der anschließenden Sinterung muß auch sehr langsam und vorsichtig aufgeheizt werden, um möglichst innere Spannungen zu verhindern. Die gleiche Vorsicht muß anschließend beim Abkühlen bis auf Raumtemperatur obwalten.

Es hat sich herausgestellt, daß Schlickergießen eine besonders einfache Methode zur Herstellung von keramischen Bauteilen und insbesondere von im Zusammenhang mit der gegenständlichen Beschreibung interessanten Vorformen für MMC-Bauteile darstellt. Gerade zur Herstellung von aus SiC bestehenden Vorformen hat sich Schlickergießen als günstig herausgestellt. Mit der Schlickergieß-Methode können aber auch aus anderen keramischen Pulvern wie Carbiden, Nitriden, Boriden, Oxiden und aus deren Mischformen, wie z.B. Oxynitriden, Vorformen hergestellt werden. An konkreten Materialien können beispielsweise SiC, TiC, B₄C, AIN, Si₃N₄, BN und Al₂O₃ angegeben werden.

Unter Schlicker versteht man eine Mischung eines Pulvers mit einer bestimmten Menge an flüssigem Träger. Im hier gegebenen Zusammenhang umfaßt der Schlicker ein keramisches Pulver, dem als flüssiger Träger z.B. Wasser zugesetzt ist. Mengt man einem keramischen Pulver flüssigen Träger zu, so verringert sich die Fließgrenze dieser Dispersion so weit, daß man zu einer strukturviskosen Flüssigkeit gelangt. Dieses dispersive System verhält sich unterhalb einer bestimmten Spannung völlig starr und läßt sich oberhalb derselben widerstandslos verformen. Die Ausübung von Scherkräften erniedrigt die Fließgrenze und der Schlicker läßt sich in die gewünschte Form gießen.

Bei noch weiterer Erhöhung des Anteiles an flüssigem Träger wird der Schlicker überhaupt (dünn-)flüssig, d.h. er kann auch ohne Einwirkung von Scherkräften in eine Form eingegossen werden.

Im bisher bekannten Stand der Technik wurde bei der Herstellung eines keramischen Körpers im Wege eines Schlickergieß-Verfahrens -unabhängig davon, ob der Schlicker flüssig war oder thixotrope Eigenschaften hatte- in einer der beiden folgenden Weisen vorgegangen:
a) Der Schlicker beinhaltete neben dem flüssigen Träger keinen Binder und wurde in Gußformen eingebracht, welche poröse Wände aufwiesen.
b) Der Schlicker beinhaltete neben dem flüssigen Träger auch einen Binder, wurde aber in Gußformen mit im wesentlichen dichter Konsistenz eingegossen.

Hinsichtlich der Variante a) ist im Detail auszuführen, daß die porösen Gußformen in erster Linie aus Gips gefertigt wurden, aber auch keramische und metallische poröse Werkstoffe in Frage kamen. Die Porosität der Gußform hat die Aufgabe, dem eingegossenen Schlicker den flüssigen Träger zu entziehen und somit den Schlicker geringfügig zu verfestigen.

Der Entzug des flüssigen Trägers beginnt in den unmittelbar an der Gußform anliegenden Bereichen des Schlickers, d.h. daß sich zunächst die äußeren Schichten des entstehenden Keramikkörpers verfestigen und damit den Transport der im Inneren noch vorhandenen Flüssigkeit in die Poren der Gußform behindern.

Insgesamt ergibt sich bei diesem von der porösen Gußform bewirkten Flüssigkeitsentzug einerseits eine sehr geringe Festigkeit des entstehenden Keramikkörpers, weshalb ein weiterer Trockenvorgang notwendig ist, um den Keramikkörper ausreichend stabil für das Entnehmen bzw. für eine sonstige Manipulation zu machen.

Daneben läuft der auf der Kapillarwirkung der Poren der Gußform beruhende Flüssigkeitsentzug sehr langsam ab, was zu einer unwirtschaftlich langen Dauer des gesamten Herstellungsverfahrens führt.

Bei diesem Flüssigkeitsentzug werden die feinen Teilchen des Keramikpulvers stärker mit der abgezogenen Flüssigkeit mitgerissen als die groben und sammeln sich bevorzugt im unteren Bereich der Gußform an. Es entsteht ein ungewollter Konzentrationsgradient im fertigen Keramikbauteil.

In diesem Zusammenhang ist weiters zu bedenken, daß sich die feinen Teilchen in der porösen Gußform einlagern können. Damit entsteht eine gewisse Verzahnung des entstehenden Keramikkörpers mit der Gußform, was die Ablösung des Keramikkörpers von der Gußform wesentlich erschwert.

Als weiterer Nachteil ist anzuführen, daß der entstehende Keramikkörper eine nur sehr geringe Dichte, d.h. eine relativ große Porosität aufweist. Um diesem Körper eine dichtere Konsistenz zu verleihen, muß er gesintert werden, wobei aber Schwindung stattfindet, sich also die Abmaße des Körpers in nicht vernachlässigbarem Ausmaß verringern. Die Fertigung eines genau vordefinierte Abmessungen aufweisenden Keramikkörpers ist mit diesem Verfahren nur sehr schwierig möglich.

Bei der unter b) angeführten Vorgangsweise erfolgt solange sich der Schlicker in der Gußform befindet, kein Entzug des flüssigen Trägers. Der Schlicker wird vielmehr mittels Einfrieren des flüssigen Trägers verfestigt, danach aus der Gußform entnommen, getrocknet (mittels Sublimation oder Verdampfung) und gesintert.

Auch hier ergibt sich das Problem, daß dem entstehenden Körper nur relativ geringe Dichten verliehen werden können.

Weiters friert der flüssige Träger nicht nur in sich bzw. hält die Partikel des Keramikpulvers aneinander fest, sondern friert desweiteren an der Gußform-Wandung fest. Damit ist auch hier das Ablösen des Keramikkörpers von der Gußform problematisch.

Die Veränderung des Materials der Gußform kann dieses Problem ebensowenig wie die Verwendung anderer Trägerflüssigkeiten verringern. Die bessere Ergebnisse liefernde Verwendung von besonders glatt polierten Gußform-Oberflächen ist aufwendig in der Herstellung. Die weiters denkbare Verwendung von auf die Gußform-Oberfläche
aufgebrachten Trennmitteln bringt die Gefahr mit sich, daß Fremdstoffe in den Keramikkörper eingebracht werden.

Nach bisher bekanntem Stand der Technik wurde zur Durchführung des Infiltrationsvorganges (=Einbringen von Metall in die Poren der Vorform), welcher dem bislang beschriebenen Verfahren zur Herstellung einer Vorform zeitlich nachgelagert ist, diese Vorform in eine andere Gußform eingebracht, welche andere Gußform verschieden von jener, zur Herstellung des Vorformkörpers verwendeten Gußform war.

Damit wies der MMC-Herstellungsprozeß (bestehend aus Vorform-Herstellung und

Infiltration derselben mit Metall) insgesamt betrachtet die mit dem Überstellen der Vorform von der ersten in die zweite Gußform verbundenen Probleme auf. Diese Probleme liegen -wie bereits oben ausführlicher dargestellt- insbesondere in den mit dem Ablösen der Vorform von der ersten Gußform verbundenen Schwierigkeiten sowie in der Notwendigkeit, daß die Vorform zur Manipulation eine gewisse Festigkeit aufweisen muß, welche aber nur durch einen zum Einbringen des Schlickers in die erste Gußform hinzutretenden Verfahrensschritt (Einfrieren oder Sintern des Schlickers) bewirkt werden kann.

Aus der WO 99/32679 ist ein Verfahren zur Produktion von MMC-Bauteilen mit Hilfe spontaner Infiltration bekannt, wobei eine poröse Vorform einem Infiltrationsbeschleuniger ausgesetzt wird, der über die zu erwartende Infiltrationstemperatur erhitzt wird. Als Beispiel 3 wird hier insbesondere beschrieben, wie die Gußform nach Abschluß des Schlicker-Einbringens mittels eines Vibrationstisches bewegt wird, wodurch der flüssige Träger aufschwimmt. Sodann wird dieser flüssige Träger abgeschöpft und erst danach die Vibration gestoppt.

Es ist Aufgabe der vorliegenden Erfindung, ein Verfahren der eingangs angeführten Art zur Herstellung von MMC-Bauteilen anzugeben, bei welchem diese Probleme vermieden werden und desweiteren das gesamte MMC-Herstellungsverfahren vereinfacht und beschleunigt wird.

Erfindungsgemäß wird dies dadurch erreicht, daß der auf den Keramikpartikeln aufschwimmende flüssige Träger nach Abstellen der Vibrationen entfernt wird, daß der Vorformkörper keinen weiteren Verfestigungsmaßnahmen, wie z.B. Sintern oder Pressen unterworfen wird und zum Eingießen des Metalles in seine Poren in der Gußform, in welcher er hergestellt wurde, belassen wird.

Da die Vorform in jener Gußform, in welcher sie hergestellt wurde, auch zur Durchführung des Infiltrationsprozesses belassen wird, entfällt der im Stand der Technik stets durchgeführte Schritt der Ablösung der Vorform von der ersten Gußform vollständig, womit natürlich sämtliche mit ihm verbundenen Nachteile wirksam vermieden werden.

Durch das Belassen der Vorform in der Gußform auch zur Durchführung des Infiltrationsvorganges ist es desweiteren nicht notwendig, der Vorform besondere, ihre Manipulation erlaubende Festigkeit zu verleihen. Ein diesbezüglicher Verfahrensschritt kann daher ebenfalls zur Gänze eingespart werden.

Die Einsparung zweier Verfahrensschritte führt insgesamt zu einer deutlichen Vereinfachung und Verschnellerung der MMC-Herstellung.

Als besonders günstig hat es sich erwiesen, daß der Schlicker noch vor Einbringung in die Gußform mit Vibrationen beaufschlagt und in die Gußform eingegossen wird.

Vom Schlicker-Behälter separate Werkzeuge zum Einbringen des Schlickers in die Gußform (Löffel oder Schaufel) können damit entfallen. Das Eingießen des Schlickers in die Gußform kann durch Kippen des Schlicker-Behälters oder durch Öffnen eines Ventiles in der Verbindungsleitung zwischen Schlicker-Behälter und Gußform durchgeführt werden.

In weiterer Ausgestaltung der Erfindung kann vorgesehen sein, daß die Entfernung des flüssigen Trägers durch Erhitzen desselben auf eine über dem Verdampfungspunkt dieses flüssigen Trägers liegende Temperatur erfolgt.

Zur nachfolgenden Infiltration der Vorform mit Metall ist es ohnehin unumgänglich, diese Vorform aufzuheizen, sodaß entsprechende Öfen ohnehin vorhanden sein müssen. Diese Öfen können zur angeführten Verdampfung des flüssigen Trägers verwendet werden, sodaß gesonderte Anlagen zur Träger-Entfernung (wie z.B. Absaugeinrichtungen) eingespart werden können, was wieder zur erfindungsgemäß zu erreichenden Vereinfachung des MMC-Herstellungsverfahrens beiträgt.

Als besonders günstig hat es sich erwiesen, daß als flüssiger Träger Wasser, tert. Butanol, Butanol-2 oder Amylalkohol verwendet wird.

Wasser ist besonders kostengünstig und führt vor allem bei einem Großteil der zur Bildung der Vorform möglichen Keramik-Materialien zur Entstehung eines thixotrope Eigenschaften aufweisenden Schlickers. Die nichtwäßrigen Träger sind natürlich nicht so kostengünstig wie Wasser, dafür läuft aber ihre Entfernung wesentlich schneller und vollständiger ab.

Als besonders vorteilhaft hat es sich desweiteren erwiesen, ein Keramikpulver mit multimodaler Kornverteilung zu verwenden.

Aus einem solchen Keramikpulver entsteht durch die Vibrationen ein Vorformkörper mit besonders hoher Packungsdichte und höherer Festigkeit als bei Verwendung eines Keramikpulvers mit monomodaler Kornverteilung.

Weiters kann vorgesehen sein, daß ein Keramikpulver verwendet wird, das Partikeln aus keramischen Carbiden, Nitriden, Boriden oder Oxiden, wie z.B. SiC, TiC, B₄C, AlN, Si₃N₄, BN oder Al₂O₃, umfaßt.

Diese Materialien haben jeweils verschiedene mechanische, elektrische und thermische Eigenschaften, können aber allesamt mit dem erfindungsgemäßen Verfahren verarbeitet werden. Durch geeignete Auswahl des verwendeten Keramik-Pulvers, welches auch eine Mischung aus verschiedenen Keramikmaterialien sein kann, können die mechanischen, elektrischen und thermischen Eigenschaften der entstehenden Vorform und des entstehenden MMC-Körpers eingestellt werden.

SiC umfassende bzw. im wesentlichen zur Gänze aus SiC bestehende Vorformen führen zur Bildung von besonders gute Wärmeleiteigenschaften aufweisenden MMC-Bauteilen, welche gleichzeitig eine besonders hohe mechanische Festigkeit aufweisen.

Als günstig hat es sich erwiesen, daß als in die Poren der Vorform infiltriertes Metall Al, Ni, Co, Fe, Mo, Mn oder Cu verwendet wird.

Auch diese Materialien haben jeweils verschiedene mechanische, elektrische und thermische Eigenschaften und können allesamt mit dem erfindungsgemäßen Verfahren verarbeitet werden. Durch geeignete Auswahl des Infiltrations-Metalles, welches auch eine Legierung verschiedener Rein-Metalle sein kann, können die mechanischen, elektrischen und thermischen Eigenschaften des entstehenden MMC-Körpers eingestellt werden.

In weiterer Ausgestaltung der Erfindung kann vorgesehen sein, daß vor dem Einbringen des Schlickers in die Gußform ein poröser keramischer Körper, dessen Porosität größer ist als jene des aus dem Schlicker entstehenden Vorformabschnittes, vorzugsweise in Gestalt einer Platte mit geringer Dicke, auf den Boden der Gußform aufgebracht wird.

Bei manchen Anwendungen ist es nötig, dem MMC-Bauteil eine bestimmte Durchbiegung zu verleihen bzw. die Ebenheit der MMC-Platte genau einzustellen. Dies kann durch dieses Einlegen eines stark porösen keramischen Plättchens in die Gußform erreicht werden. Es wird damit eine Vorform hergestellt, welche zwei Bereiche unterschiedlicher Porosität aufweist: Im Bereich des eingelegten Plättchens liegt eine stärkere Porosität als im darüberliegenden, aus dem Schlicker gebildeten Abschnitt vor. Bei der Infiltration dieser Vorform mit Metall kann in den stärker porösen unteren Abschnitt des entstehenden MMC-Bauteiles mehr Metall eindringen als in den darüberliegenden Abschnitt, womit der MMC-Bauteil zwei Schichten mit unterschiedlichem Aufbau und unterschiedlichen Eigenschaften aufweist. Die untere Schicht mit dem weitaus höheren Metallanteil bewirkt nun, daß der gesamte MMC-Bauteil in dessen Richtung verbogen ist (selber Effekt wie bei einem Bimetall). Durch entsprechende Auswahl der Dicke des eingelegten Keramikkörpers läßt sich das Ausmaß der Durchbiegung einstellen.

In diesem Zusammenhang hat es sich als besonders günstig erwiesen, daß ein aus dem Material der im Schlicker enthaltenen Keramikpartikeln gebildeter keramischer Körper verwendet wird, weil damit der einzige Unterschied zwischen den beiden Abschnitten des entstehenden MMC-Bauteiles in der Menge des Infiltrationsmetalles liegt, wodurch sich die Unterschiede in den Eigenschaften dieser beiden Abschnitte relativ einfach abschätzen lassen.

Gemäß einer bevorzugt eingesetzten Weiterbildung dieser Erfindungs-Variante kann vorgesehen sein, daß der poröse keramische Körper dadurch hergestellt wird, daß vor dem Einbringen des Schlickers in die Gußform eine Emulsion, gebildet aus einem feinen keramischen Pulver mit einer mittleren Korngröße von kleiner 15 µm oder aus einem Pulvergemisch 70/30 mit einer Korngröße von 12µm und 3µm und einem flüssigen Träger, in die Gußform eingebracht, glattgestrichen und getrocknet wird.

Damit können zur Herstellung des porösen keramischen Körpers dieselben Werkzeuge (Gußform, Gefäße,...) wie zur Herstellung des zweiten Vorform-Abschnittes aus dem Schlicker verwendet werden, womit diese Erfindungs-Variante nur geringfügigen Mehraufwand (nämlich den mit der Herstellung des porösen keramischen Körpers verbundenen Zeitaufwand) mit sich bringt.

In diesem Zusammenhang hat es sich als günstig erwiesen, daß ein aus dem Material der im Schlicker enthaltenen Keramikpartikeln gebildetes keramisches Pulver verwendet wird, weil damit die oben bereits erwähnte Bildung des Keramikkörpers aus dem Material des anderen Vorform-Abschnittes erreicht wird.

In weiterer Ausgestaltung der Erfindung kann vorgesehen sein, daß vor dem Eingießen des Metalles in die Poren der Vorform aus der Oberfläche der Vorform zur Erzeugung von Strukturen, wie Bohrungen oder Nuten., bereichsweise Keramikpartikel abgesaugt werden.

Dies stellt eine besonders verschleißarme Bearbeitungsmöglichkeit der Vorform dar, welcher geringe Verschleiß den technischen Aufwand des Verfahrens deutlich herabsetzt, weil keine hochfesten Werkzeuge, die bei bisher bekannter Bearbeitung der keramischen Vorform nach einem Sintervorgang notwendig wären.

Dabei kann in Weiterbildung der Erfindung vorgesehen sein, daß vor dem Absaugen der Keramikpartikel jene Bereiche der Vorform, aus welchen Keramikpartikeln abgesaugt werden sollen, durch Bearbeitung mittels Fräser oder Stempel gelockert werden.

Das zu entfernende Material läßt sich dadurch mit wesentlich weniger Saugleistung absaugen. Diese geringere Saugleistung verringert die Gefahr, daß auch aus benachbarten, nicht zu entfernenden Bereichen Keramikpartikeln abgesaugt werden, wesentlich, sodaß die Bearbeitung Strukturen mit besonders genau definierten Konturen liefert.

In diesem Zusammenhang kann vorgesehen sein, daß in die durch bereichsweises Absaugen von Keramikpartikel gebildeten Strukturen Platzhalter eingebracht werden.

Diese Platzhalter verhindern das Eindringen von Infiltrationsmetall in die herausgearbeiteten Strukturen, sodaß durch Entfernen dieser Platzhalter -was mit wesentlich weniger Aufwand verbunden ist als das Entfernen des Infiltrationsmetalles- die Strukturen im endgültig entstehenden MMC-Bauteil erzeugt werden können.

Die Erfindung wird nachstehend unter Bezugnahme auf die beigeschlossenen Zeichnungen, in welchen besonders bevorzugte Ausführungsbeispiele dargestellt sind, näher beschrieben. Dabei zeigt:
Fig. 1 eine Vorrichtung zur Durchführung des ersten Teilverfahrens des erfindungsgemäßen MMC-Herstellungsverfahrens betreffend die Herstellung einer porösen Vorform schematisch im Aufriß;
Fig.2a,b jeweils eine Vorrichtung zur Durchführung des zweiten Teilverfahrens des erfindungsgemäßen MMC-Herstellungsverfahrens betreffend die Infiltration der porösen Vorform mit Metall schematisch im Aufriß;
Fig.3 eine in einer Gußform 5 befindliche Vorform 7 nach Abschluß des ersten Teilverfahrens des erfindungsgemäßen MMC-Herstellungsverfahrens während der Durchführung eines bevorzugt eingesetzten Bearbeitungsverfahrens schematisch im Aufriß und
Fig.4 eine in einer Gußform 5 befindliche Vorform 7 nach Abschluß des ersten Teilverfahrens des erfindungsgemäßen MMC-Herstellungsverfahrens, wobei die Vorform 7 zwei unterschiedlich poröse Abschnitte 7' und 7" aufweist, schematisch im Aufriß.

Ein Metall-Matrix-Composite- (MMC-) Bauteil umfaßt einerseits eine keramische Vorform, die poröse Konsistenz aufweist und andererseits ein Matrix-Metall, welches in die Poren dieser Vorform eingebracht ist. Zusätzlich kann die äußere Oberfläche der Vorform von Schicht aus Matrix-Metall umgeben, mit diesem Metall also umgossen sein.

Ein Verfahren zur Herstellung eines solchen Metall-Matrix-Composite- (MMC-) Bauteiles, worauf sich die gegenständliche Erfindung bezieht, zerfällt im wesentlichen in zwei Teilverfahren:

Als erstes muß die poröse Vorform hergestellt werden, danach wird diese Vorform mit dem Matrix-Metall infiltriert, d.h. dieses in die Poren der Vorform eingebracht. Die gegenständliche Erfindung bezieht sich auf die gesamte MMC-Herstellung, also auf die Gesamtheit beider eben erläuterten Teilverfahren.

Die Vorform kann -wie eingangs bereits erläutert- aus einer losen Schüttung eines Keramikpulvers bestehen, die Poren werden dann durch die Abstände zwischen den einzelnen Teilchen dieser losen Schüttung gebildet. Eine weitere und im Zusammenhang mit der gegenständlichen Erfindung allein interessante Möglichkeit liegt darin, daß die Vorform durch einen (oder mehrere) selbsttragende Körper gebildet ist, welcher/welche Körper poröse Konsistenz aufweist/aufweisen.

Sowohl für das erste Teilverfahren (Herstellung der porösen Vorform) als auch für das zweite Teilverfahren (Infiltration der porösen Vorform mit Matrix-Metall) sind bereits einige, in der Beschreibungseinleitung ausführlich erläuterte Vorgangsweisen bekannt.

Hinsichtlich des ersten Teilverfahrens (Herstellung der porösen Vorform) wird erfindungsgemäß eine vorteilhafte Modifikation eines bestimmten, bekannten Verfahrens zur Herstellung einer Vorform vorgenommen, das zweite Teilverfahren kann allerdings ein unmodifiziertes, für sich bekanntes Infiltrationsverfahren sein. Die eigentliche Erfindung liegt in der Verbindung der beiden Teilverfahren miteinander bzw. in der Modifikation der zwischen den beiden Teilverfahren vorzunehmenden Maßnahmen.

Zur Herstellung der Vorform wird keramisches Pulver mit einem flüssigen Träger ohne Zugabe eines Bindemittels zu einem thixotrope Eigenschaften aufweisenden Schlicker vermischt. Das Weglassen eines im Stand der Technik häufig verwendeten Bindemittels (z.B. Stearinsäure) bringt eine wesentliche Verbesserung des gesamten MMC-Herstellungsverfahrens mit sich, weil dadurch ein zeitaufwendiger Entbinderungsprozeß entfallen kann. Dieser Entbinderungsprozeß besteht in der Regel in einem der Entfernung des flüssigen Trägers nachfolgenden Aufheizen der Keramikpartikel-Masse über den Verdampfungspunkt des Bindemittels. Bei den dabei auftretenden hohen Temperaturen können Deformationen im Formteil auftreten und die Gase der Umgebungsatmosphäre, insbesondere Sauerstoff, mit den Keramikpartikeln reagieren, wobei unerwünschte, die Eigenschaften der entstehenden Vorform und des letztendlich entstehenden MMC-Bauteiles nachteilig beeinflussende Verbindungen entstehen. Da bei dem erfindungsgemäßen Verfahren dieser Entbinderungs-Vorgang völlig entfallen kann, können auch diese Probleme nicht auftreten.

Die Entstehung der thixotropen Eigenschaften hängt von Material und Menge des flüssigen Trägers einerseits und des keramischen Pulvers andererseits ab. Weiters sind die Korngrößen und Kornverteilungen im keramischen Pulver zu berücksichtigen.

Die Wahl des flüssigen Trägers ist weiters dadurch bestimmt, daß dieser flüssige Träger das verwendete Keramikpulver nicht angreifen oder chemisch verändern darf. Der flüssige Träger sollte bei Raumtemperatur flüssig sein, bei Temperaturen unter 200°C verdampfen und erst bei Temperaturen unter 20°C fest werden. Ein niedriger Dampfdruck ist auch anzustreben, da damit eine längere Haltbarkeit des flüssigen Trägers gegeben ist. Ein hoher Dampfdruck kann eine relativ schnelle Verdunstung bewirken, sodaß sich bei der Vorformherstellung bereits die Konzentration verändert. Das heißt aber nicht, daß nicht auch Produkte verwendet werden können, welche diese Parameter erst durch Änderung der Temperatur oder des Druckes bekommen. Entsprechende Flüssigkeiten sind z.B. Wasser, organische Lösungsmittel, (einbis zweiwertige) Alkohole und organische Säuren. Tert.-Butanol ist ein Beispiel für ein Produkt, das bei Raumtemperatur noch fest sein kann (Schmelzpunkt 23-25°C). Als weitere Beispiele für als Träger verwendbare Flüssigkeiten können Butanol-2 und Amylalkohol angegeben werden.

Die thixotropen Eigenschaften werden desweiteren durch den pH-Wert des flüssigen Trägers beeinflußt, sodaß auch durch Zugabe von diesen pH-Wert verändernden Stoffen (Säuren oder Laugen) die geforderten thixotropen Eigenschaften eingestellt werden können.

Ein Fachmann wird ausgehend von diesen Angaben durch Vornahme entsprechender Versuche herausfinden, für welches keramische Material welcher flüssige Träger in welcher Menge eingesetzt werden muß. Dessenungeachtet werden die bevorzugt eingesetzten Schlicker-Zusammensetzungen, welche thixotrope Eigenschaften aufweisen, wie folgt angegeben:

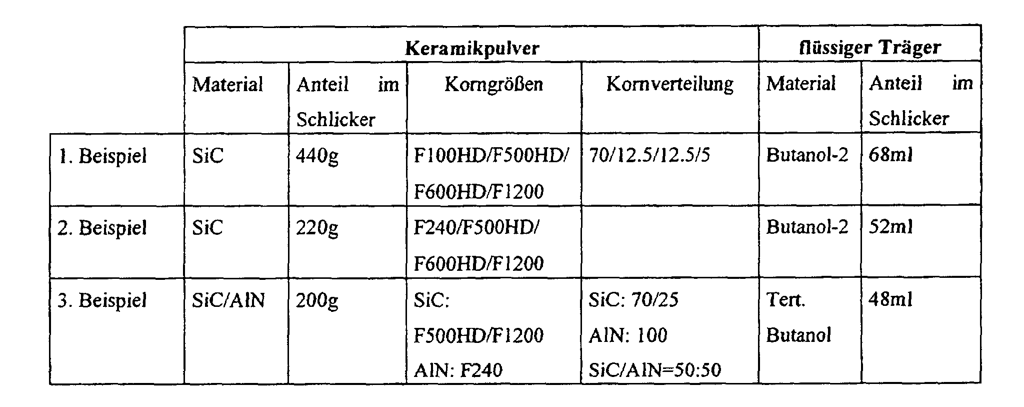

Jeder dieser Schlicker ist aufgrund seiner thixotropen Eigenschaften im Ruhezustand nicht fließfähig. Werden Scherkräfte auf ihn ausgeübt, was durch Beaufschlagung des Schlickers mit Vibrationen erreicht wird, wird der Schlicker fließfähig und kann daher in eine Gußform eingegossen werden.

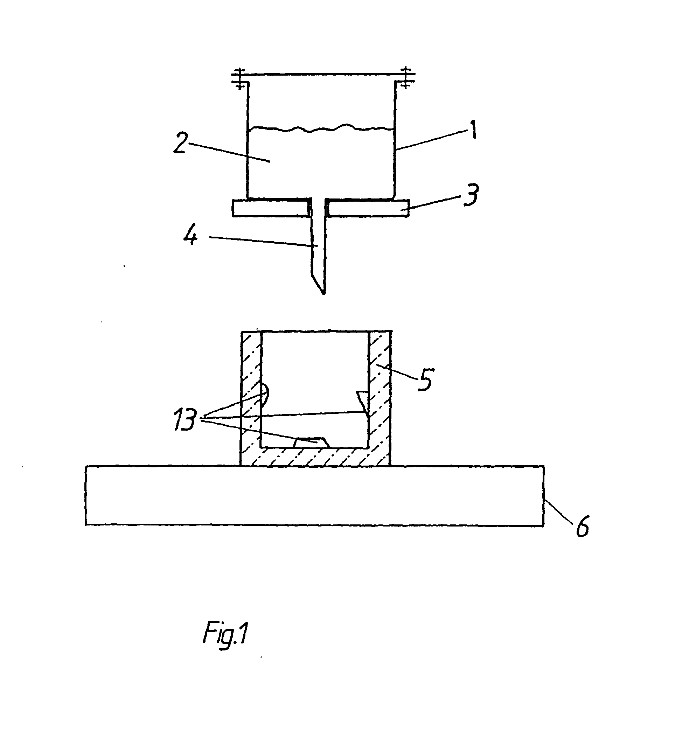

Eine Möglichkeit der praktischen Durchführung dieses unter Vibrationen erfolgenden Eingießens des Schlickers in eine Gußform zeigt Fig.1 in schematischer Darstellung: Das den Schlicker 2 beinhaltende Gefäß 1 ist in Kontakt mit einer Rüttelplatte 3, indem es auf dieser Rüttelplatte 3 steht. Der Schlicker 2 kann über ein in den Boden des Gefäßes 1 eingebohrtes Rohr 4 in die unter dem Gefäß 1 befindliche Gußform 5 fließen.

Sobald der Schlicker 2 das Rohr 4 verlassen, insbesondere das Innere die Gußform 5 erreicht hat, wird er von der Rüttelplatte 3 nicht mehr in Vibrationen versetzt, sodaß er wieder fest werden würde. Damit wäre aber keine vollständige Ausfüllung der Gußform 5 mit Schlicker 2 möglich, was aber nicht wünschenswert ist. Damit eine vollständige Füllung der Gußform 5 mit Schlicker 2 möglich ist, wird auch diese Gußform 5 mit Vibrationen beaufschlagt, was wieder mittels einer Rüttlerplatte 6, auf welcher die Gußfom 5 steht, erreicht wird. Die Gußform 5 wird zumindest nach Abschluß des Schlicker-Eingießens mit Vibrationen beaufschlagt, wodurch der Schlicker 2 nochmals flüssig wird und sich damit gleichmäßig in der Gußform 5 verteilen kann. Bevorzugterweise wird die Gußform 5 bereits während des Schlicker-Einbringens -andauernd oder nur zeitweise- vibriert.

Das Vibrieren der Gußform 5 hat zur Folge, daß der Schlicker 2 auch noch dann, wenn er sich bereits im Inneren dieser Gußform 5 befindet, fließfähig bleibt und diese vollständig ausfüllen kann.

Eine andere, ohne Vibration des Schlicker-Gefäßes 1 auskommende Möglichkeit des Einbringens des Schlickers 2 in die Gußform 5 liegt darin, diesen mittels -händisch oder maschinell (z.B. mittels Roboterarm) bewegten- Schaufeln oder Löffeln in Gestalt von einzelnen Klumpen in die Gußform 5 einzubringen. Auch hier wird die Gußform 5 zumindest nach Abschluß des Schlicker-Einbringens in Vibrationen versetzt, vorzugsweise aber schon während des Schlicker-Einbringens mit Vibrationen beaufschlagt.

Die Gußform 5 weist im wesentlichen dichte Konsistenz auf, worunter zu verstehen ist, daß die Gußform 5 keine kapillare Saugwirkung aufweist, aufgrund welcher der flüssige Träger aus dem Schlicker 2 entfernt werden würde, so wie dies im eingangs erörterten Stand der Technik der Fall ist. Als konkretes Gußform-Material kann insbesondere Graphit angegeben werden.

Ist die vorgesehene Schlickermenge zur Gänze in die Gußform 5 eingebracht und durch Vibration derselben gleichmäßig in der Gußform 5 verteilt, kann der Schlicker 2 erstarren gelassen werden, was ganz einfach durch Abstellen der Vibrationen und In-Ruhe-Halten der Gußform 5, also durch Abstellen der Rüttlerplatte 6, erreicht werden kann.

In diesem erstarrten Schlicker ist aber noch immer der flüssige Träger enthalten, welcher aber zur Weiterverarbeitung des Schlickers 2 in einen Vorformkörper (bzw. in letzter Konsequenz zu einem MMC-Bauteil) entfernt werden muß. Daneben muß der Schlicker 2 noch zu einem Vorformkörper verfestigt werden. Die Erfindung setzt nun an diesen beiden Punkten wie folgt an:

Die Entfernung des flüssigen Trägers aus dem Schlicker 2 sowie die Verfestigung des verbleibenden Keramikpulvers erfolgt erfindungsgemäß in einem einzigen Verfahrensschritt. Dieser besteht darin, daß die Gußform 5 nach Abschluß des Schlicker-Einbringens und vor dem Erstarren-Lassen weiterhin mit Vibrationen beaufschlagt gehalten wird, wodurch der im Schlicker 2 enthaltene flüssige Träger von den Keramikpartikeln abgetrennt wird und auf diesen aufschwimmt.

Der flüssige Träger wird dabei gleichsam hochgerüttelt, umgekehrt wandern die Keramikpartikeln nach unten. Diese Sedimentation wird durch die Vibrationen wesentlich beschleunigt, sodaß sich der Vorformkörper wesentlich schneller bildet, als bei Stand-der-Technik-gemäßen Verfahren, bei welchen der Schlicker 2 in poröse Gußformen eingegossen, diese in Ruhe belassen werden und der flüssige Träger durch die kapillare Saugwirkung der Gußform abgezogen wird.

Durch die Vibrationen werden die Keramikpartikeln desweiteren besonders eng aneinander angelegt, was zu einer sehr hohen Packungsdichte des entstehenden Vorformkörpers führt. Dieses eng aneinander Legen führt weiters zu einer gewissen Verzahnung der einzelnen Partikeln untereinander, sodaß ein Vorformkörper mit gewisser Festigkeit entsteht. Diese Festigkeit ist freilich geringer als eine durch Sintern oder Einfrieren des Schlickers 2 erreichbare Festigkeit, wie aber weiter unten erläutert wird, braucht der Vorformkörper aufgrund weiterer erfindungsgemäßer Maßnahmen eigentlich keine zur Manipulation des Vorformkörpers notwendige Festigkeit aufzuweisen.

Die Zeitdauer, während derer die Gußform 5 gerüttelt werden muß, um den erörterten Effekt der Entfernung des flüssigen Trägers zu erreichen, hängt in erster Linie vom Volumen der Vorform ab, als Faustregel kann eine Rütteldauer von etwa einer Minute pro Millimeter Vorformdicke angegeben werden. Ein weiterer, die Rütteldauer beeinflussender Parameter ist die Kornzusammensetzung der Vorform. Abhängig von diesem Parameter und von weiteren Größen, wie z.B. der zu erreichenden Dichte und Festigkeit der Vorform können auch längere Rüttelzeiten von 2-4 min und länger notwendig sein.

Bei diesem Rüttelvorgang werden neben der Abscheidung des flüssigen Trägers und der Verfestigung der Keramikpartikeln zusätzlich auch im Schlicker eingeschlossene Luftblasen entfernt.

Die erörtere hohe Packungsdichte sowie die Verfestigung des Schlickers 2 zu einem Vorformkörper findet insbesondere dann in besonders hohem Ausmaß statt, wenn das im Schlicker 2 enthaltene Keramikpulver eine multimodale Kornverteilung aufweist. Als Beispiel kann eine quattromodale Kornverteilung angeführt werden, bei welcher 70 Vol.-% des Pulvers durch Partikeln mit einer mittleren Korngröße von 70µm gebildet sind, 12,5 Vol.-% eine mittlere Korngröße von 13µm, 12,5 Vol.-% eine mittlere Korngröße von 10µm und 5 Vol.-% eine mittlere Korngröße von 3µm aufweisen.

Bei einer solchen multimodalen Kornverteilung bewirken die Vibrationen des Schlickers 2 ein Einlagern der feineren Partikeln in die Abstände zwischen den größeren Partikeln, womit eine große Anzahl der bestehenden Hohlräume jeweils in sehr hohem Ausmaß mit Keramikmaterial gefüllt wird. Darüberhinaus stellen die Vibrationen sicher, daß die verschieden großen Partikeln sehr gleichmäßig über das gesamte Volumen der Gußform 5 verteilt werden. Insbesondere wird eine Entmischung des Keramikpulvers verhindert, welche sich beim Stand-der-Technik-gemäßen, ohne Vibrationen durchgeführten Sedimentationsprozeß darin äußert, daß die schweren, großen Partikeln nach unten absinken und die leichten, kleinen Partikel auf diesen aufschwimmen. Die Folge ist eine inhomogene Materialverteilung verbunden mit einer inhomogenen Porosität der Vorform (zwischen den schweren, großen Partikeln entstehen größere Hohlräume als zwischen den kleinen, leichten Partikeln), was letztendlich zu einem inhomogenen MMC-Bauteil führt.

Das Keramikpulver kann aber durchaus auch monomodal sein und beispielsweise eine Korngröße von 3µm aufweisen. Sowohl für eine multi- als auch für eine monomodale Kornverteilung gilt, daß das Keramikpulver nicht auf feine Partikeln mit Korngrößen im µm-Bereich beschränkt ist, sondern auch deutlich größere Körner, d.h. bis zu Korngrößen von 1mm, eingesetzt werden können.

Das Keramikpulver kann desweiteren im wesentlichen nur aus einem Material bestehen oder durch eine Mischung aus mehreren Materialien gebildet sein. Als konkrete Keramikmaterialien können Carbide, Nitride, Boride und Oxide, beispielsweise SiC, TiC, B₄C, AIN, Si₃N₄, BN und Al₂O₃ angegeben werden. Ein besonders bevorzugt eingesetztes Keramikpulver ist ein SiC-Pulver mit beliebigen Korngrößen.

Der flüssige Träger, der sich durch das Rütteln auf dem Vorformkörper angesammelt hat, muß vor Weiterverarbeitung der Vorform entfernt werden. Die Maßnahmen hierfür sind grundsätzlich beliebig wählbar, beispielsweise könnte der flüssige Träger mit einem vakuumbeaufschlagten Rohr abgesaugt werden oder eine saugfähige Struktur ähnlich einem Schwamm oder einem Löschblatt in Kontakt mit dem flüssigen Träger gebracht werden.

Bevorzugt wird allerdings dieser flüssige Träger verdampft, d.h. der flüssige Träger durch entsprechende Erhöhung der Umgebungstemperatur über seinen Verdampfungspunkt erhitzt, was am einfachsten dadurch erfolgt, daß die gesamte Gußform 5 entsprechend erhitzt wird. Bei diesem Aufheizschritt tritt eine leichte Verfestigung des Vorformkörpers ein, welche verhindert, daß weitere Verdichtungen des Vorformkörpers beim nachfolgenden Füllen der Poren mit Metall stattfinden können, welche möglicherweise zu Inhomogenitäten des entstehenden MMC-Bauteiles führen können.

Wie weiter oben angeführt, weist der flüssige Träger einen niedrigen Verdampfungspunkt auf, sodaß zur Entfernung des flüssigen Trägers nur relativ geringe Temperaturen notwendig sind. Damit ist einerseits der zum Erhitzen notwendige Energieaufwand gering und wird andererseits das zwangsweise miterhitzte Material (Gußform 5, Schlicker 2) nur sehr wenig beansprucht.

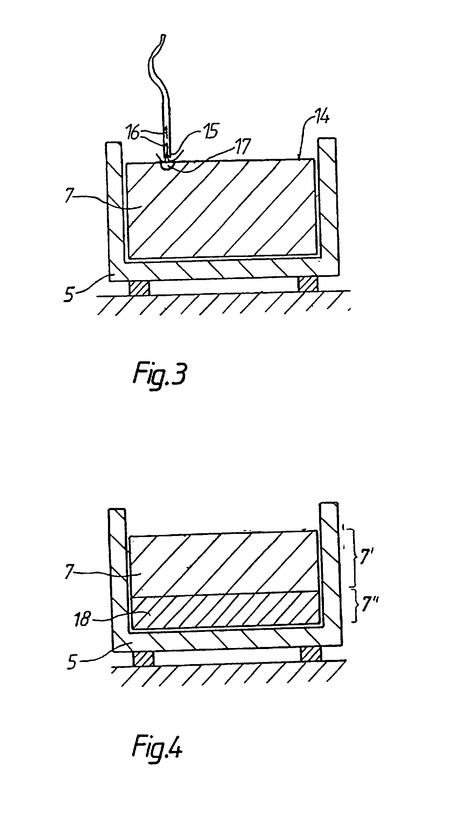

Es ist möglich, eine Vorform 7 herzustellen, die wie in Fig.4 dargestellt, aus zwei Abschnitten 7' und 7" besteht, welche Abschnitte 7',7" voneinander verschiedene Eigenschaften aufweisen, also z.B. aus verschiedenen Materialien bestehen, verschiedene Porositäten od. dgl. aufweisen. Um eine solche zweischichtige Vorform 7 zu erhalten, wird vor dem Einbringen des Schlickers 2 in die Gußform 5 ein poröser keramischer Körper 18, dessen Porosität größer ist als jene des aus dem Schlicker 2 entstehenden Vorformabschnittes 7', vorzugsweise in Gestalt einer Platte mit geringer Dicke, auf den Boden der Gußform 5 gelegt. Dieser keramische Körper 18 kann außerhalb der Gußform 5 bereits fertig hergestellt werden, d.h. mit fester Konsistenz in die Gußform 5 eingebracht werden. Bevorzugterweise wird allerdings der poröse keramische Körper 18 dadurch hergestellt, daß vor dem Einbringen des Schlickers 2 in die Gußform 5 eine Emulsion gebildet wird, welche aus einem feinen keramischen Pulver mit einer mittleren Korngröße von kleiner 15 µm und einem flüssigen Träger besteht. Diese Emulsion wird in die Gußform 5 eingebracht, glattgestrichen und getrocknet. Damit wird der poröse keramische Körper 18 innerhalb der Gußform 5 vor dem Einbringen des Schlickers 2 hergestellt.

Bei Verwendung eines Keramik-Pulvers, insbesondere eines SiC-Pulvers, mit einer Korngröße von 3µm wird der erhaltene Körper oder die erhaltene Schicht eine Porosität von etwa 25 Vol.-% aufweisen. Durch Variation der Zusammensetzung des Pulvers läßt sich die Porosität zusätzlich kontrollieren. So ergibt z.B. eine Keramikpulver-Mischung, insbesondere eine SiC-Pulvermischung, mit 70% Anteil einer mittleren Korngröße von 12µm und 30% Anteil einer mittleren Korngröße von 3 µm eine Porosität von 38 Vol.-%.

Das Material des keramischen Körpers 18 kann grundsätzlich beliebig, also auch verschieden vom Material des aus dem Schlicker 2 entstehenden Vorformabschnittes 7' gewählt werden. Vorzugsweise wird allerdings ein aus dem Material der im Schlicker 2 enthaltenen Keramikpartikeln gebildeter keramischer Körper 18 verwendet. Bei Fertigung dieses Körpers 18 aus einer in die Gußform 5 eingebrachten Emulsion wird dazu bei Herstellung dieser Emulsion ein aus dem Material der im Schlicker 2 enthaltenen Keramikpartikeln gebildetes keramisches Pulver verwendet.

Ein wesentliches Merkmal der vorliegenden Erfindung liegt -wie eingangs bereits kurz angegeben- darin, die zwischen dem ersten Teilverfahren der Vorform-Herstellung und dem zweiten Teil-Verfahren der Infiltration dieser Vorform mit Metall vorzunehmenden Maßnahmen zu verändern.

In der Beschreibungseinleitung wurde ausführlich dargelegt, daß nach bisher bekanntem Stand der Technik die fertige Vorform aus der ersten Gußform 5 entnommen und zur Durchführung des Infiltrationsvorganges in eine weitere Gußform überstellt wurde. Um bei diesen Schritten nicht zu zerbrechen bzw. überhaupt in dieser Weise handhabbar zu sein, mußte die Vorform entsprechend stark verfestigt werden, was in der Regel durch einen Sinterprozeß oder durch Einfrieren des noch nicht entfernten flüssigen Trägers erreicht wurde. Erfindungsgemäß wird der Vorformkörper hingegen keinen weiteren Verfestigungsmaßnahmen, wie z.B. Sintern, Pressen od. dgl. unterworfen und wird desweiteren zur Durchführung des Infiltrationsvorganges, d.h. zum Eingießen des Metalles in seine Poren, in jener Gußform 5, in welcher er hergestellt wurde, belassen. Möglich bzw. sogar notwendig ist es zwar, die Gußform 5 gemeinsam mit dem Vorformkörper in eine Vorrichtung zur Durchführung der Infiltration, z.B. in einen Drucktiegel, in einen Ofen od. dgl. einzubringen, wie erläutert wird dabei aber die Vorform nicht aus der Gußform 5 entnommen sondern das Infiltrationsmetall in diese Gußform 5 eingebracht.

Durch diese Doppelverwendung der Gußform 5 fallen sämtliche in der Beschreibungseinleitung dargestellte Probleme im Zusammenhang mit dem Ablösen des Vorformkörpers von der zu seiner Herstellung verwendeten Gußform 5 weg. Weiters kann ein Werkzeug, nämlich eine zweite Gußform, sowie der Zeitaufwand für die Überstellung der Vorform von der ersten in die zweite Gußform eingespart werden.

Die weiter oben bereits angeführte Entfernung des flüssigen Trägers durch Erhitzen kann während des Aufheizens der Vorform vor der Metallinfiltration erfolgen: Es wird dabei kein separates Erhitzen der Gußform 5 in einem Trockenschrank durchgeführt, sondern die Gußform 5 wird unmittelbar nach Abstellen der Vibrationen in die Vorrichtung zur Heizung der Vorform auf die zur Metallinfiltration notwendige Temperatur eingebracht, wobei der auf den Keramikpartikeln aufschwimmende Träger verdampft. Bei dieser Vorgangsweise kann das erfindungsgemäße Verfahren mit einem Erhitzungsprozeß weniger durchgeführt werden, wodurch hierfür notwendige Geräte (Trockenschrank) eingespart und der Verfahrensablauf um die Zeitdauer des Trockenschrittes beschleunigt werden kann.

Nach dem Schlickern, also nach Abschluß der Entfernung des flüssigen Trägers bildet das in der Gußform befindliche Keramikpulver keine ebene Fläche, welche mit der Gußform-Oberkante in einer Ebene liegt, sondern das Pulver weist mehr oder weniger unebene Bereiche auf, welche über dem Rand der Gußform liegen. Damit Gußform und Deckel bündig abschließen, muß das über die Gußform-Oberkante überstehende Pulver abgestreift oder abgezogen werden, was händisch oder maschinell erfolgen kann.

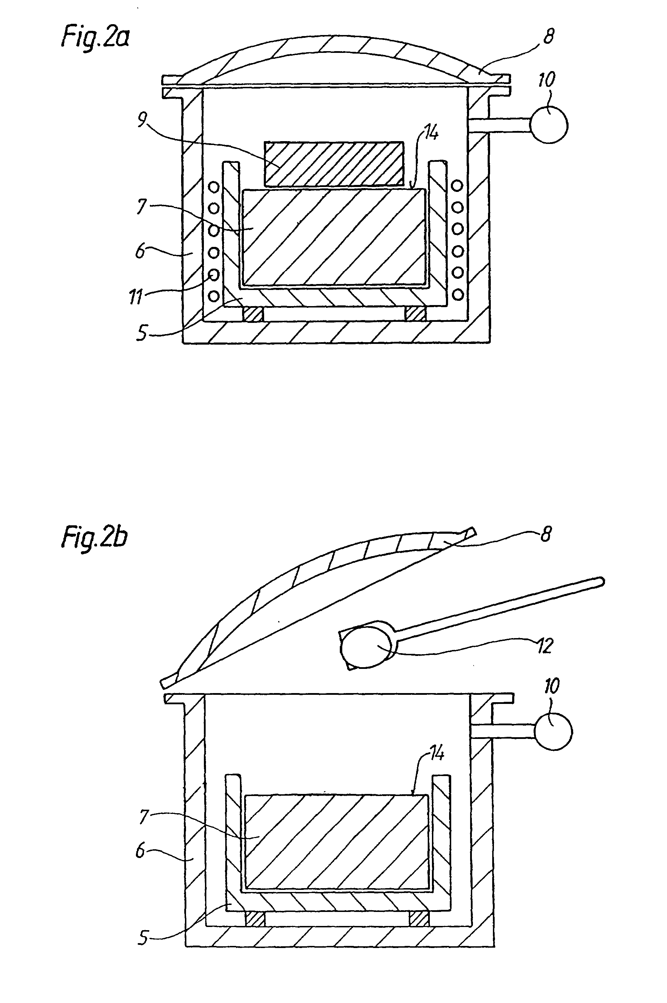

Der Infiltrationsprozeß läuft -wie eingangs bereits festgehalten- nach einem beliebigen, im Stand der Technik für sich bekannten Verfahren ab. Der guten Ordnung halber sei nachstehend in der gebotenen Kürze an Hand von Fig.2a,b ein Gasdruck-Infiltrationsverfahren erörtert, welches besonders bevorzugt eingesetzt wird.

In diesen Figuren ist mit 6 ein Druckgefäß bezeichnet, in welchem der Infiltrationsvorgang durchgeführt wird. Im Inneren dieses Druckgefäßes 6 befindet sich die Gußform 5, welche die Vorform 7 beinhaltet.

Das Druckgefäß 6 ist mit Hilfe des Deckels 8 verschließbar, sodaß Druck aus einer Druckquelle 10 an die Vorrichtung angelegt werden kann. Auf der Vorform 7 liegt ein Block aus aufzuschmelzendem Infiltrationsmetall. Unter dem Einfluß der Heizung 11 wird die Vorform 7 erhitzt und der Metall-Block 9 aufgeschmolzen. Nach vollständiger Aufschmelzung des Metall-Blockes 9 wird das Druckgefäß 6 mit von der Druckquelle 10 geliefertem Gasdruck beaufschlagt, wodurch das flüssige Metall in die Poren der Vorform 7 gepreßt wird. Sodann wird die Heizung 11 abgeschaltet und das Metall unter Beibehaltung des Gasdruckes erstarren gelassen.

Zu bedenken ist dabei natürlich, daß die Poren der Vorform 7 Luft enthalten, welche beim erörterten Hineinpressen des Metalles in die Vorform 7 komprimiert wird aber innerhalb der Vorform 7 bleibt. Sofern man diese Luft vor dem Infiltrieren entfernen will, kann man das beispielsweise durch Evakuieren des Druckgefäßes 6 vor dem Aufschmelzen des Metall-Blockes 9 erreichen.

Fig. 2b stellt eine alternative Ausgestaltung der Vorrichtung gemäß Fig. 2a dar, bei welcher die Heizung 11 weggelassen ist. Hier wird die Gußform 5 zusammen mit der Vorform 7 an anderer, außerhalb des Druckgefäßes 6 liegender Stelle erhitzt genauso wie das Metall 12 außerhalb des Druckgefäßes 6 erhitzt und im bereits schmelzflüssigen Zustand auf die Vorform 7 aufgebracht wird.

Danach wird der Deckel 8 geschlossen, das Innere des Druckgefäßes 6 mit Druck vermittels der Druckquelle 10 beaufschlagt, hierdurch das flüssige Metall in die Poren der Vorform 7 gepreßt und das Metall erstarren gelassen.

Die erfindungsgemäße Besonderheit liegt darin, daß die zum Halten der Vorform während der Infiltration verwendete Gußform 5 jene Gußform ist, welche auch zur vorher erfolgten Herstellung der Vorform 7 eingesetzt wurde.

Anstelle dieses Gasdruck-Infiltrationsvorganges kann auch ein Verfahren mit mechanischer Druck-Aufbringung (ein sog. squeeze-casting-Verfahren) oder ein spontanes Infiltrationsverfahren eingesetzt werden. Da derartige Verfahren hinlänglich bekannter Stand der Technik sind, wird von einer detaillierten Erörterung derselben abgesehen.

Für sehr viele Einsatzfälle von MMC-Bauteilen reicht es nicht aus, diese Bauteile mit durchgängigen Oberflächen herzustellen, vielmehr müssen in die MMC-Bauteile dreidimensionale Strukturen wie Durchgangslöcher, Gewinde, Nuten, Schlitze, großflächige Einbuchtungen od. dgl. eingearbeitet werden. Nachträgliches Bearbeiten eines bereits festen MMC-Materials ist ein technisch aufwendiges und damit verbunden ein kostspieliges Unterfangen aufgrund der hohen Abrasivität des MMC-Materiales. Wesentlich einfacher ist es, die Bearbeitung an der noch nicht mit Metall infiltrierten aber ansonst bereits fertigen Vorform vorzunehmen oder aber diese Vorform schon mit den gewünschten Strukturen herzustellen, d.h. beim Schlickergießen dieser Vorform zu berücksichtigen.

Für die Bearbeitung der fertigen Vorform kommen eigentlich nur trennende Verfahren in Frage. Die trennende Bearbeitung kann entweder nach der Formgebung als Grünbearbeitung oder nach dem sogenannten Zwischen- oder Schrühbrand, bei dem der Bauteil noch nicht die endgültige Festigkeit erreicht hat, als Weißbearbeitung oder nach dem Sintern im Zustand der Endfestigkeit als Hartbearbeitung erfolgen.

Bei der Grünbearbeitung ist zu beachten, daß der Grünling eine geringe Festigkeit besitzt, die manchmal nur zur Handhabung ausreicht. Bei der Weißbearbeitung ist die gegenüber dem Grünzustand erhöhte Bauteilfestigkeit vorteilhaft. Es besteht weitgehende Freiheit in der Wahl des trennenden Fertigungsverfahrens. Die Hartbearbeitung nach dem Sintern der Bauteile, also dicht gesinterter Bauteile, ist die mühseligste Bearbeitungsvariante wegen der bereits sehr hohen Festigkeit des Bauteiles. Außerdem kommen hier nur mehr Schleifen, Honen und Läppen mit Diamantwerkzeugen in Frage. Hieraus ergibt sich, daß größere Formänderungen durch Hartbearbeitung sehr kostenintensiv sind und komplizierte Bauteile kaum mehr zu fertigen sind.

Ein weiterer Nachteil der obigen Verfahren ist die Änderung der Abmessungen nach der Formgebung bzw. nach der Bearbeitung im Grün- und Weißzustand durch den anschließenden Sinterschritt bzw. thermischen Verdichtungsvorgang. Wird der Formling weiterverwendet, nämlich als Vorform für die MMC-Herstellung, ist auf Grund der Infiltration mit Metall und der sich außenherum bildenden Metallschicht eine weitere Änderung der Abmessungen gegeben. Zusätzlich wird die Vorformhalterung bei der Infiltration Einfluß auf die Endmaße nehmen.

Diese Komplexität der Änderungen in den Abmessungen erfordert einmal sehr viel Erfahrung, andererseits werden, je nach Komplexität des Formlings, umfangreiche Vorversuche zur Ermittlung der Maßänderungen notwendig sein, um schlußendlich die erforderlichen Abmessungen für die Werkzeugform zu erhalten. Um komplizierte Formgebung zu erreichen, muß also ein komplexes Preßwerkzeug konstruiert werden. Aufgrund der beim Brennen auftretenden Änderungen und der beim Infiltrieren auftretenden Änderungen in den Abmessungen ist die Erreichung der richtigen Endmaße sowohl zeit- als auch werkzeugtechnisch aufwendig.

Ein weiterer Nachteil ist die Entstehung von inneren Spannungen im Material beim Sintern durch unsymmetrische Verteilung des Materials im Formling. Komplexe Formen bedeuten auch unterschiedliche Materialhäufungen im Formling und Materialhäufungen bedeuten unterschiedliche Schrumpfungsvorgänge. Dadurch können Verzugserscheinungen und

Verwerfungen auftreten, welche z.B. die Ebenheit und die Parallelität des Formlings negativ beeinflussen.

Um schon die Vorform mit den gewünschten Strukturen zu fertigen, ist es möglich, an jenen Stellen, wo die Strukturen endgültig angeordnet sein sollen, vor dem Eingießen des Schlickers 2 in die Gußform 5, an der Innenwandung der Gußform 5 entsprechend der zu erzeugenden Struktur gestaltete Platzhalter 13 anzubringen, vorzugsweise anzukleben (vgl. Fig.1). Diese Platzhalter 13 können beispielsweise aus Aluminium, Graphit, oder Graphit/Aluminium bestehen. Beim Eingießen des Schlickers 2 in die Gußform 5 werden diese Einsätze vom Schlicker 2 umgossen, womit aber der Bereich dieser Einsätze von Schlicker 2 und damit von Vorformmaterial freigehalten wird. Beim nachfolgenden Infiltrationsprozeß werden die Platzhalter 13 von Infiltrationmetall umgossen, womit der Bereich der Platzhalter 13 auch von Infiltrationsmetall freigehalten wird.

Nach Abschluß des MMC-Herstellungsvorganges und Entnahme des MMC-Bauteiles aus der Gußform 5 werden diese Platzhalter 13 z.B. durch Ausbohren, Ausschlagen oder Auspressen entfernt und der fertige MMC-Bauteil bekommt an den Stellen dieser Einsätze die gewünschte Strukturierung.

Daneben ist es auch möglich, den Platzhalter 13 im MMC-Bauteil zu belassen und ihn lediglich zu bearbeiten. Diese Vorgangsweise ist besonders interessant für Durchgangslöcher und Gewinde, welche in aus Metall, vorzugsweise Aluminium, bestehende Platzhalter 13 gebohrt bzw. geschnitten werden.

Weiters ist es möglich, Stahl- oder Graphitbolzen als Platzhalter 13 zur Herstellung von Durchganglöchern zu verwenden, welche Bolzen nach Entnahme des MMC-Bauteiles aus der Gußform 5 aus dem MMC-Bauteil herausgepreßt werden.

Diese Möglichkeit der Strukturierung ist allerdings nur bei jenen Oberflächen des MMC-Bauteiles möglich, welche an eine der Gußform-Wandungen anliegt.

Da die erfindungsgemäß eingesetzte Gußform 5 einseitig offen ist (vgl. Fig.1,2), können in diese freie Oberfläche 14 Strukturen nicht durch Einlegen von Platzhaltern 13 erzeugt werden. Die Einbringung von Strukturen in diese Oberfläche 14 erfolgt erfindnungsgemäß in der Weise, daß vor dem Eingießen des Metalles in die Poren der Vorform 7 aus der Oberfläche 14 der Vorform 7 zur Erzeugung von Strukturen, wie Bohrungen, Nuten od. dgl., bereichsweise Keramikpartikel abgesaugt werden.

Dies geschieht mittels einer in Fig.3 schematisch dargestellten Düse 15, die mit Unterdruck beaufschlagt ist. Diese erzeugt daher einen mit den Pfeilen 16 symbolisierten Luftstrom, welcher Keramikpartikel aus der Oberfläche 14 heraus- und mit sich mitreißt. Diese Saugdüse 15 kann mittels einer CNC-Steuerung verfahren werden, wodurch sie sehr präzise bewegt werden kann und damit genau vorgegebene Oberflächen-Strukturierungen erzeugt werden können.

Durch geeignete Dimensionierung der Düse 15 (Durchmesser, Form, Stärke des Unterdruckes) lassen sich Strukturen 17 unterschiedlichster Art, wie z.B. Durchgangslöcher, Sacklöcher mit verschiedenen Querschnitten (rechteckig, quadratisch, kreisrund, oval,...) herstellen. Weitere wesentliche, die Gestalt der entstehenden Strukturen 17 beeinflussende Faktoren sind die Saugleistung (Menge Luft/Zeiteinheit) als auch die Absenkgeschwindigkeit der Düse 15 in das Pulverbett. Wird die Düse 15 bei konstanter Saugleistung zu schnell abgesenkt, reicht die Absaugleistung nicht aus und Pulverreste werden in der gerade erzeugten Struktur zurückbleiben. Wird die Düse 15 zu langsam in das Pulverbett hineingesenkt, wird Pulver aus der Umgebung des Loches mitgerissen und die Folge ist ein zu großes und unförmiges Loch.

Um die Entstehung von Strukturen 17 mit besonders genau definierten Konturen sicherzustellen, kann vor dem Absaugen das Material in den zu entfernenden Bereichen der Vorform gelockert werden, was durch mechanische Bearbeitung dieser Bereiche, beispielsweise durch Fräser, Stempel od. dgl. erfolgen kann. Nach einer solchen Vorbehandlung läßt sich das zu entfernende Material mit wesentlich weniger Saugleistung absaugen, wodurch die nicht betroffenen Bereiche besser geschützt sind vor der Saugwirkung. Ein unerwünschtes Absaugen von Partikeln aus diesen nicht zu bearbeitenden Bereichen ist damit weitgehend vermieden.

Voraussetzung für das Funktionieren dieses Bearbeitungsverfahrens ist das zuvor dargestellte erfindungsgemäße Vorform-Herstellungsverfahren.

Die durch dieses Verfahren hergestellten Vorformen weisen lediglich eine geringe Festigkeit auf, welche es erlaubt, einzelne Keramikpartikeln mittels der Düse 15 abzusaugen, gleichzeitig aber sicherstellt, daß die Seitenwände der dadurch entstehenden Strukturen stabil sind, d.h. nicht einfallen.

Wäre die Festigkeit der Vorform zu gering (würde diese beispielsweise nur aus einem lose geschütteten Keramikmaterial bestehen), würden keine definierten Bereiche abgesaugt werden können, weil einfach zu viele Keramikteilchen vom Luftstrom mitgerissen würden bzw. die Wandungen der entstehenden Strukturen einfallen würden.

Umgekehrt wiese eine gesinterte Vorform eine so hohe Festigkeit auf, daß mittels der Unterdruck-beaufschlagten Düse überhaupt kein Material abgesaugt werden könnte.

Vor dem Infiltrationsvorgang können die durch lokales Absaugen entstandenen Strukturen mit Platzhaltern gefüllt werden, damit sie nicht von Infiltrationsmetall ausgegossen werden.

Nach Abschluß des Infiltrationsvorganges können diese Platzhalter durch mechanische Bearbeitung (Ausbohren, Ausschlagen) entfernt werden.

Daneben ist es auch möglich, daß der Infiltrationsvorgang ohne Ausfüllung der herausgesaugten Strukturen durchgeführt wird. Dabei füllt das Infiltrationsmetall zwar die erzeugten Strukturen, dieses Metall kann dann aber -so wie die Platzhalter- durch mechanische Bearbeitung entfernt werden, wodurch letztendlich der entstehende MMC-Bauteil wieder die gewünschte Strukturierung erhält.

Der Platzhalter kann beispielsweise aus Graphit bestehen, welches Material sich relativ leicht bearbeiten läßt. Für die Herstellung eines Durchgangsloches bestehen im wesentlichen folgende zwei Möglichkeiten: Die im Bereich des Durchgangsloches liegenden Keramikpartikeln werden abgesaugt und das dabei entstehende Loch in der Vorform wird vor der Infiltration nicht oder mit einem Platzhalter aus Graphit gefüllt. Nach der Infiltration wird entweder das sich nunmehr in der Durchgangsbohrung befindliche Infiltrationsmetall oder der Graphit-Platzhalter ausgebohrt. Die zweite Möglichkeit der Herstellung eines Durchgangsloches liegt darin, einen Stahlbolzen als Platzhalter zu verwenden, der nach der Infiltration aus der Vorform herausgepreßt wird.

## Patentansprüche

1. Verfahren zur Herstellung eines Metall-Matrix-Composite- (MMC-) Bauteiles umfassend eine keramische, poröse Konsistenz aufweisende Vorform, deren Poren mit Matrix-Metall gefüllt sind, wobei
zur Herstellung der Vorform keramisches Pulver mit einem flüssigen Träger ohne Zugabe eines Bindemittels zu einem thixotrope Eigenschaften aufweisenden Schlicker (2) vermischt wird,
dieser Schlicker (2) in eine im wesentlichen dichte Konsistenz aufweisende Gußform (5) eingebracht wird, welche Gußform (5) zumindest nach Abschluß des Schlicker-Einbringèns, vorzugsweise auch während des Schlicker-Einbringens, mit Vibrationen beaufschlagt wird, und der Schlicker (2) durch Abstellen der Vibrationen und In-Ruhe-Halten der Gußform (5) erstarren gelassen wird, wobei weiters
der Schlicker (2) in der Gußform (5) zu einem Vorformkörper verfestigt wird und Metall in die Poren dieses Vorformkörpers eingegossen wird und
die Gußform (5) nach Abschluß des Schlicker-Einbringens und vor dem Erstarren-Lassen weiterhin mit Vibrationen beaufschlagt gehalten wird, wodurch der im Schlicker (2) enthaltene flüssige Träger von den Keramikpartikeln abgetrennt wird und auf diesen aufschwimmt und der Schlicker (2) gleichzeitig zu einem Vorformkörper verfestigt wird,
**dadurch gekennzeichnet, daß** der auf den Keramikpartikeln aufschwimmende flüssige Träger nach Abstellen der Vibrationen entfernt wird, daß
der Vorformkörper keinen weiteren Verfestigungsmaßnahmen, wie z.B. Sintern oder Pressen unterworfen wird und
zum Eingießen des Metalles in seine Poren in der Gußform (5), in welcher er hergestellt wurde, belassen wird.

2. Verfahren nach Anspruch 1, **dadurch gekennzeichnet, daß** der Schlicker (2) noch vor Einbringung in die Gußform (5) mit Vibrationen beaufschlagt und in die Gußform (5) eingegossen wird.

3. Verfahren nach Anspruch 1, **dadurch gekennzeichnet, daß** die Entfernung des flüssigen Trägers durch Erhitzen desselben auf eine über dem Verdampfungspunkt dieses flüssigen Trägers liegende Temperatur erfolgt.

4. Verfahren nach Anspruch 1, 2 oder 3, **dadurch gekennzeichnet, daß** als flüssiger Träger Wasser, tert. Butanol, Butanol-2 oder Amylalkohol verwendet wird.

5. Verfahren nach einem der Ansprüche 1 bis 4, **dadurch gekennzeichnet, daß** ein Keramikpulver mit multimodaler Kornverteilung verwendet wird.

6. Verfahren nach einem der Ansprüche 1 bis 5, **dadurch gekennzeichnet, daß** ein Keramikpulver verwendet wird, das Partikeln aus keramischen Carbiden, Nitriden, Boriden oder Oxiden, wie z.B. SiC, TiC, B₄C, AlN, Si₃N₄, BN oder Al₂O₃, umfaßt.

7. Verfahren nach einem der Ansprüche 1 bis 6, **dadurch gekennzeichnet, daß** als in die Poren der Vorform infiltriertes Metall Al, Ni, Co, Fe, Mo, Mn oder Cu verwendet wird.

8. Verfahren nach einem der vorstehenden Ansprüche, **dadurch gekennzeichnet, daß** vor dem Einbringen des Schlickers (2) in die Gußform (5) ein poröser keramischer Körper (18), dessen Porosität größer ist als jene des aus dem Schlicker (2) entstehenden Vorformabschnittes (7'), vorzugsweise in Gestalt einer Platte mit geringer Dicke, auf den Boden der Gußform (5) gelegt wird.

9. Verfahren nach Anspruch 8, **dadurch gekennzeichnet, daß** ein aus dem Material der im Schlicker (2) enthaltenen Keramikpartikeln gebildeter keramischer Körper (18) verwendet wird.

10. Verfahren nach Anspruch 8 oder 9, **dadurch gekennzeichnet, daß** der poröse keramische Körper (18) dadurch hergestellt wird, daß vor dem Einbringen des Schlickers (2) in die Gußform (5) eine Emulsion, gebildet aus einem feinen keramischen Pulver mit einer mittleren Korngröße von kleiner 15 µm oder aus einem Pulvergemisch 70/30 mit einer Korngröße von 12µm und 3µm und einem flüssigen Träger, in die Gußform (5) eingebracht, glattgestrichen und getrocknet wird.

11. Verfahren nach Anspruch 10, **dadurch gekennzeichnet, daß** ein aus dem Material der im Schlicker (2) enthaltenen Keramikpartikeln gebildetes keramisches Pulver verwendet wird.

12. Verfahren nach einem der vorstehenden Ansprüche, **dadurch gekennzeichnet, daß** vor dem Eingießen des Metalles in die Poren der Vorform aus der Oberfläche der Vorform zur Erzeugung von Strukturen, wie Bohrungen oder Nuten, bereichsweise Keramikpartikel abgesaugt werden.

13. Verfahren nach Anspruch 12, **dadurch gekennzeichnet, daß** vor dem Absaugen der Keramikpartikel jene Bereiche der Vorform, aus welchen Keramikpartikeln abgesaugt werden sollen, durch Bearbeitung mittels Fräser oder Stempel gelockert werden.

14. Verfahren nach Anspruch 12 oder 13, **dadurch gekennzeichnet, daß** in die durch bereichsweises Absaugen von Keramikpartikel gebildeten Strukturen Platzhalter eingebracht werden.

## Claims

1. A method for producing a metal matrix composite (MMC) component, comprising a preform having a ceramic, porous consistency whose pores are filled with matrix metal, with ceramic powder being mixed with a liquid carrier without the addition of a bonding agent into a slip (2) having thixotropic properties for the purpose of producing a preform, with said slip (2) being introduced into a casting mould (5) having a substantially dense consistency, which casting mould (5) is subjected to vibrations at least after the completion of the introduction of the slip, preferably also during the introduction of the slip, and the slip (2) is allowed to set by stopping the vibrations and by keeping it still in the casting mould (5), with the slip (2) in the casting mould (5) being hardened into a preform body and metal being cast into the pores of said preform body and the casting mould (5) being subjected further to vibrations after the completion of the introduction of the slip and prior to letting it set, as a result of which the liquid carrier contained in the slip (2) is separated from the ceramic particles and will swim on the same and the slip (2) is simultaneously hardened into a preform body, **characterized in that** the liquid carrier swimming on the ceramic particles is removed after stopping the vibrations, that the preform body is not subjected to any further hardening measures such as sintering or pressing for example and is left in the casting mould (5) in which it was produced for pouring the metal into its pores.

2. A method as claimed in claim 1, **characterized in that** the slip (2) is subjected to vibrations even before the introduction into the casting mould (5) and is poured into the casting mould (5).

3. A method as claimed in claim 1, **characterized in that** the removal of the liquid carrier occurs by heating the same to a temperature above the evaporation point of said liquid carrier.

4. A method as claimed in claim 1, 2 or 3, **characterized in that** water, tertiary butanol, butanol-2 or amyl alcohol is used as liquid carrier.

5. A method as claimed in one of the claims 1 to 4, **characterized in that** a ceramic powder with a multi-modal grain distribution is used.

6. A method as claimed in one of the claims 1 to 5, **characterized in that** a ceramic powder is used which comprises particles made of ceramic carbides, nitrides, borides or oxides such as SiC, TiC, B₄C, AIN, Si₃N₄, BN or Al₂O₃ for example

7. A method as claimed in one of the claims 1 to 6, **characterized in that** Al, Ni, Co, Fe, Mo, Mn or Cu is used as the metal which infiltrates the pores of the preform.

8. A method as claimed in one of the preceding claims, **characterized in that** prior to the introduction of the slip (2) into the casting mould (5) a porous ceramic body (18) whose porosity is higher than that of the preform section (7') arising from the slip (2), preferably in the form of a plate of low thickness, is placed on the floor of the casting mould (5).

9. A method as claimed in claim 8, **characterized in that** a ceramic body (18) is used which is formed from the material of the ceramic particles contained in the slip (2).

10. A method as claimed in claim 8 or 9, **characterized in that** the porous ceramic body (18) is produced in such a way that prior to the introduction of the slip (2) into the casting mould (5) an emulsion which is formed of a fine ceramic powder with a mean grain size of smaller than 15 µm or of a powder mixture 70/30 with a grain size of 12 µm and 3 µm and a liquid carrier is introduced into the casting mould (5), strickled off and dried.

11. A method as claimed in claim 10, **characterized in that** a ceramic powder is used which is formed from the material of the ceramic particles contained in the slip (2).

12. A method as claimed in one of the preceding claims, **characterized in that** prior to the pouring of metal into the pores of the preform, ceramic particles are sucked off from the surface of the preform for producing structures such as bores or grooves.

13. A method as claimed in claim 12, **characterized in that** prior to sucking off the ceramic particles, those sections of the preform from which ceramic particles are to be sucked off are loosened by machining by means of cutters or plungers.

14. A method as claimed in claim 12 or 13, **characterized in that** placeholders are introduced into the structures formed by the sucking off of ceramic particles in sections.

## Revendications

1. Procédé de fabrication d'une pièce en matériau composite à matrice métallique (CMM) comprenant une préforme céramique poreuse dont les pores sont remplis d'un métal pour matrice,
la réalisation de la préforme consistant à mélanger une poudre céramique sans addition de liant à un liquide porteur pour obtenir un coulis (2) présentant des propriétés thixotropes,
introduire ledit coulis (2) dans un moule (5) d'une consistance sensiblement dense, ledit moule (5) étant soumis à des vibrations au moins après que le coulis a été introduit dans le moule mais de préférence aussi pendant son introduction, et laisser se solidifier ledit coulis (2) en faisant cesser les vibrations et en maintenant le moule (5) au repos,
laisser en outre se solidifier le coulis (2) dans le moule (5) jusqu'à obtention d'un corps de préforme et couler du métal dans les pores de cette préforme et
soumettre en outre la préforme (5) à des vibrations après que le coulis y a été introduit et avant qu'on l'y laisse se solidifier, ceci provoquant la séparation du liquide porteur contenu dans le coulis (2) des particules de céramiques, ledit liquide porteur flottant alors à la surface de celles-ci, et laisser simultanément se solidifier le coulis (2) qui forme alors un corps de préforme,
**caractérisé en ce que** le liquide porteur flottant sur les particules de céramique est éliminé une fois que les vibrations ont cessé, que
le corps de préforme n'est soumis à aucune autre mesure de solidification telle que frittage ou compression et qu'il
est laissé dans le moule (5) dans lequel il a été réalisé pour couler le métal dans ses pores.

2. Procédé selon la revendication 1, **caractérisé en ce que** le coulis (2) est soumis à des vibrations avant même d'être introduit dans le moule (5) et qu'il est coulé dans ledit moule (5).

3. Procédé selon la revendication 1, **caractérisé en ce que**, pour éliminer le liquide porteur, celui-ci est réchauffé et porté à une température supérieure au point de vaporisation dudit liquide porteur.

4. Procédé selon la revendication 1, 2 ou 3, **caractérisé en ce que** le liquide porteur utilisé est de l'eau, du tert-butanol, du butanol-2 ou de l'alcool amylique.

5. Procédé selon l'une quelconque des revendications 1 à 4, **caractérisé en ce que** la poudre céramique utilisée a une granulométrie multimodale.

6. Procédé selon l'une quelconque des revendications 1 à 5, **caractérisé en ce qu'**une poudre céramique est utilisée qui renferme des particules de carbures, nitrures, borures ou oxydes céramiques, par exemple de SiC, de TiC, de B₄C, d'AlN, de Si₃N₄, de BN ou d'Al₂O₃.

7. Procédé selon l'une quelconque des revendications 1 à 6, **caractérisé en ce que** le métal utilisé pour infiltrer les pores de la préforme est de l'Al, du Ni, du Co, du Fe, du Mo, du Mn ou du Cu.

8. Procédé selon l'une quelconque des revendications précédentes, **caractérisé en ce qu'**avant d'introduire le coulis (2) dans le moule (5) on place dans le fond du moule (5) un corps céramique poreux (18) dont la porosité est supérieure à celle du segment de préforme (7') obtenu à partir du coulis (2) et qui a de préférence la forme d'une plaque de faible épaisseur.

9. Procédé selon la revendication 8, **caractérisé en ce qu'**on utilise un corps céramique (18) formé à partir du matériau des particules de céramique contenues dans le coulis (2).

10. Procédé selon la revendication 8 ou 9, **caractérisé en ce que**, pour réaliser le corps céramique (18), une émulsion formée à partir d'une poudre céramique fine d'une granulométrie moyenne inférieure à 15 µm ou d'un mélange de poudre 70/30 d'une granulométrie de 12 µm et de 3 µm et d'un liquide porteur est introduite dans le moule (5), égalisée et séchée avant que le coulis (2) ne soit introduit dans le moule (5).

11. Procédé selon la revendication 10, **caractérisé en ce qu'**on utilise une poudre céramique formée à partir du matériau des particules de céramique contenues dans le coulis (2).

12. Procédé selon l'une quelconque des revendications précédentes, **caractérisé en ce qu'**avant de couler le métal dans les pores de la préforme on aspire des particules de céramique de la surface de la préforme dans certaines zones de celle-ci pour obtenir des structures telles des alésages ou des gorges.

13. Procédé selon la revendication 12, **caractérisé en ce qu'**avant d'aspirer les particules de céramique on usine les zones de la préforme desquelles on veut aspirer des particules de céramique au moyen d'une fraise ou d'un poinçon pour les rendre moins denses.

14. Procédé selon la revendication 12 ou 13, **caractérisé en ce qu'**on introduit dans les structures formées dans certaines zones par l'aspiration de particules de céramique des pièces d'écartement destinées à occuper temporairement la place desdites structures.
